# EUROPEAN PATENT SPECIFICATION

(11) **EP 0 291 092 B1**
(45) Date of publication and mention of the grant of the patent: **15.02.1995**
(21) Application number: 88107768.9
(22) Date of filing: 13.05.1988
(51) Int. Cl.: B65B 51/30

(54) **Tubular web sealing apparatus**
Schlauchbandsiegelapparat
Appareil de scellement de bande tubulaire

(30) Priority: 13.05.1987 JP 116693/87
(43) Date of publication of application: 17.11.1988
(73) Proprietor: AB TETRA PAK, 221 00 Lund (SE)
(72) Inventor: Esco, Heinonen-Person, S-214 00 Esloev (SE); Helge, Andersson, S-223 55 Lund (SE)
(74) Representative: Glawe, Delfs, Moll & Partner

(56) References cited:
- EP-A- 0 091 712
- AU-D- 2 779 767
- DE-A- 2 658 695
- DE-B- 1 170 741
- GB-A- 1 021 302

## Description

The invention relates to a tubular web sealing apparatus as defined in the preamble parts of claims 1 and 2. An apparatus this kind is preferably used in a packaging machine for forming closed packaging containers from a continuous tubular member which is made of laminiated packaging material, the containers being filled with liquid. Such an apparatus is disclosed for example in EP-A-0 091 712.

As is known in the prior art, to provide a brick-shaped beverage packaging container filled with liquid food such as milk, juice, or the like, a continuous tubular member or web, which is formed from a laminiated packaging material blank and provided with fold lines to contain a liquid, is sealed at uniform intervals, filled with the liquid and separated, and has top and bottom triangular folding flaps formed to be bonded to the end and sides of the container. As described particularly EP-A-0 091 712, a tubular material web processing apparatus, which is utilized for sealing the tubular member at uniform intervals for separation, has at least one pair of cooperating sealing jaws which are disposed on both sides of the tubular material web and reciprocated in both lengthwise and transverse directions of the web so as to press the tubular member from the two sides to change a circular configuration in cross section thereof into a cross-sectionally square or rectangular configuration, and at the time, as to shape the same during the downward motion and release it during the upward returning motion. A yoke accommodating the aforesaid opposing jaws is connected to a rod which is moved upward and downward by means of a radial cam. Additionally, another rod arranged parallel to the aforesaid rod is disposed having a radial cam mounted on the same axle or shaft as the aforesaid radial cam so that the opposing jaws are moved transversely (for opening and closing actions) by means of a difference between the lengthwise movements of the two linked rods. This tubular material web processing apparatus has a pair of the aforesaid arrangements which are disposed in symmetry relationship on both sides of a drive gear mechanism so that their respective pairs of jaws operate alternately for sealing operation.

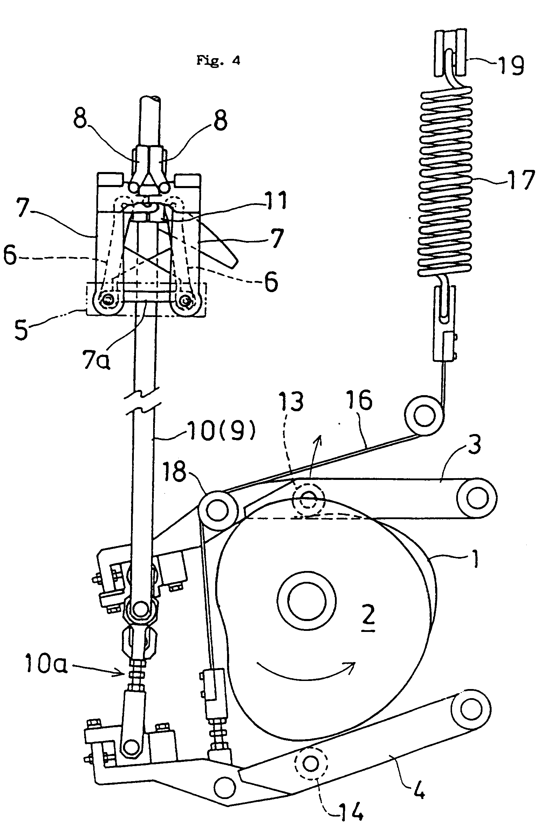

In working with continuous tubular web on such a tubular material web processing apparatus, the sealing jaws, after pressing the tubular web with their forming flaps from both sides, start opening towards the end of the downward stroke and will remain opened during the upward movement of the yoke during general operations. However, particularly when a tubular web filled with no liquid is provided for a trial run, the jaws may travel downward towards the bottom of stroke along with their top-mounted forming flaps sticking to the web and will return upward as being lifted by the yoke (as shown in Fig. 4) thus to produce the excessive pressure exerted against each other while remaining closed. An overload produced will then cause the machine to stop. Upon finding the problem, an operator of the machine has to stop operation to prevent damage to the machine and remove the problem manually. Additionally, similar problems may arise when the upward movement of a rod (a second drive rod) communicated via links with the jaws stops as in case a spanner is caught in a radial cam mechanism for actuating the second drive rod, or in case a pressing means (a toothed belt), by which an arm communicated with the second drive rod and actuated by the radial cam is pressed down on the cam face, is broken or cut apart.

The present invention is directed, in view of the aforesaid points, towards an overload protection device for protecting the tubular material web processing apparatus from overloading caused when the jaws in a closed state advance upward, thus removing the reason for the machine to stall.

According to the invention, this object is achieved by a tubular web sealing apparatus of the aforementioned kind, which has the characterizing features of claim 1 and/or claim 2. Claims 3,4 and 5 relate to further advantageous embodiments.

In the device according to the present invention, a pair of the sealing jaws are actuated transversely to open for non-operation during a large portion of their upward movements and to close for operation during a large portion of their downward movements, according to a difference between the lenghtwise movements of the first and second drive rods which are communicated, respectively, to the yoke accommodating the two opposing jaws and via the links to the jaws. The two sealing jaws, which are closed, start opening when coming close to the end of the downward movement and become open at the bottom of the downward stroke before the yoke returns upwardly. At this time the cam follower arm, by its auxiliary roller, is positively guided by the arc-shaped guiding member disposed on a side of the second cam and thus, the cam roller is positively kept in contact with the bottom surface of the second cam, at the beginning of its upward stroke after reaching the bottom position, so as to positively raise the second drive rod. Accordingly, the sealing jaws communicated via the links with the second drive rod will be forced to open about the time that the second drive rod starts moving upward. This prevents a sudden stop of the machine resulting from overloading and allows it to operate in a proper condition, since an overloading would occur when the two sealing jaws with their top-mounted forming flaps sticking to the web member and thus remaining closed, bear an excessive load exerted against each other upon returning upwardly.

Otherwise, in the alternative device having
an overload coupling mechanics disposed between the second drive rod and the cam follower arm so that a rod member can move along the axial line, the detection switch operates to stop the machine through detecting a small movement between the sub-rod and the joint member when the second drive rod bears an excessive pulling force which is greater than a normal rating and exerted through the upward motion of the yoke when the sealing jaws remaining closed upon stopping its upward movement in case a spanner is caught in the bottom of the second radial cam for upward and downward movements of the second drive rod or in case a pressing member (a toothed belt) for pressing the cam follower arm against the bottom of the second radial cam is broken.

Preferred embodiments according to the present invention are shown in the drawings, in which:
- Fig. 1: is a perspective view of a tubular material web processing apparatus having a first overload protection device according to the present invention;
- Fig. 2: is a front view of a main section of the tubular material web processing apparatus having the overload protection device;
- Fig. 3: is a front view, similar to Fig. 2, in which sealing jaws are about to move upward;
- Fig. 4: is a front view of a prior art apparatus, in which sealing jaws stop moving downward in a closed state;
- Fig. 5: is an explanatory view of one of the jaws closed as shown in Fig. 4, bearing an inward pressing force;
- Fig. 6: is a partially vertical cross-sectional front view of an alternative overload protection device, according to the present invention, mounted to the lower portion of a second drive rod;
- Fig. 7: is a partially vertical cross-sectional front view showing the overload protection device of Fig. 6 in motion.

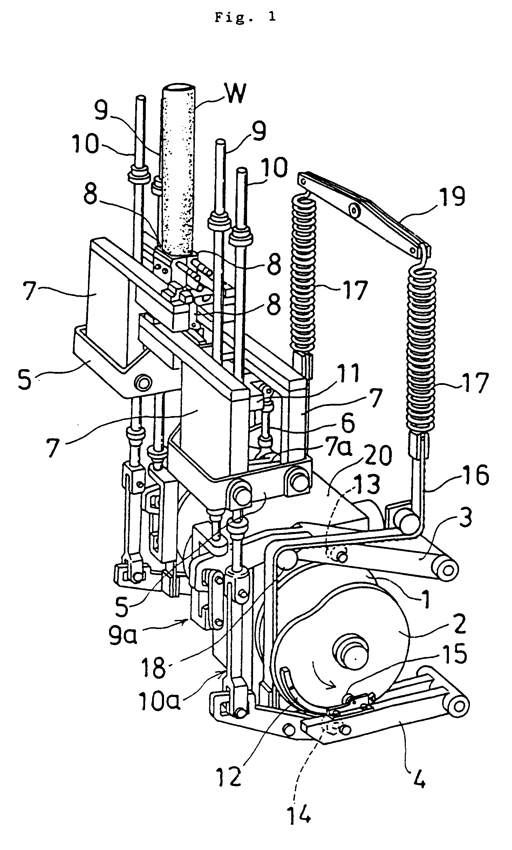

According to Fig. 1-3, the tubular material web processing apparatus has a pair of cooperating sealing jaws 7, 7 which are pivotably mounted to a yoke 5 and disposed on both sides of the vertical path of continuous tubular member (tubular material web) W so as to move upwards and downwards in lengthwise directions and crosswise directions of the material web. The tubular web W is preferably formed from a heat softening material blank having a laminated thermoplastic layer thereon and folding lines therein and filled with a liquid. The yoke 5 is connected to a first drive rod 9, which is one of two equally spaced drive rods 9 and 10 extending to move in the lengthwise direction of the tubular material web W. The drive rod 9 is communicated via a joint rod 9a with the end of a first arm 3 pivotally mounted to the machine frame (not shown). The arm 3 has a cam roller 13 which is rotatably mounted thereto and rotates on the top surface of a first radial cam 1 so that the arm 3 moves upwards and downwards.

As a pair of said first radial cams 1 are disposed respectively on both sides of a drive gear mechanism 20, two sets of the above mentioned mechanical arrangements are disposed in symmetrical relationship. The description will be made hereinafter on the tubular material web processing apparatus closer to the viewer in Fig. 1.

The two opposing sealing jaws 7, 7 have their respective jaw arms 7a, 7a connected via links 6, 6 to a bracket 11 of the aforesaid second drive rod 10. The second drive rod 10 is connected via a joint rod 10a with the end of a second arm 4 pivotally mounted to the machine frame beneath the first arm 3. The second arm 4 has a cam roller 14 which is rotatably mounted thereto and rotates on the bottom surface of a second radial cam 2 mounted on the same axle as and on the outer side of the first radial cam 1, so that the second drive rod 10 can reciprocate upwards and downwards. To press the first and second arms 3, 4 against their respective cam surfaces running, a toothed belt 16 is mounted to the second arm 4 with an end stud thereof secured to a determined position adjacent to the end of the lower arm 4 and extends therefrom around a pulley 18 mounted to a side of the first arm 3 and around a pulley mounted to the machine body, to an extension coil spring 17. A pair of the springs 17, which are each associated with respective one of said two tubular web processing apparatuses arranged in symmetry relationship on both sides of the drive gear mechanism 20, hang down from both ends of a lever 19 which is disposed parallel to the cam drive axle and supported in its center. As the first and second radial cams 1, 2 turn in the counter-clockwise direction, the first and second drive rods 9, 10 reciprocate upward and downward. According to the mechanical arrangement, the transverse movements of the two opposing sealing jaws 7, 7 are obtained by means of the difference between the lengthwise movements of the two drive rods 9 and 10 with the cam 1 and drive rod 9 controlling the vertical reciprocating movement of the jaws 7, 7 and the cam 2 and drive rod 10 controlling the opening and closing of the jaws 7, 7.

A pair of forming flaps 8, 8, each of which as a U-shaped configuration in cross section and moves in transverse directions of the material web W, are pivotably mounted to their respective jaws 7, 7 in the top ends thereof so that the material web W can be formed from its cross-sectionally round configuration into a specific square or rectangular configuration upon being pressed by the forming flaps 8, 8. During the forming operation of the material web, the forming flaps 8, 8 press against each other by means of the movements of cams mounted to a frame of the machine as not shown. The two opposing sealing jaws 7, 7 keep pressing the tubular web with their respective top-mounted forming flaps 8, 8 thus to form it from it cross-sectionally round configuration into a specific square configuration while traveling downward with the flaps closed. As moving towards the bottom of stroke, the jaws 8, 7 will open gradually and then, release the formed web upon returning upwardly. The two sets of pairs of sealing jaws 7, 7, which are installed in the respective tubular material web processing apparatuses disposed in both the front and rear sides of the drive gear mechanism 20 of the machine, operate alternately to press the tubular web by adjusting the timing thus preventing mutual collision.

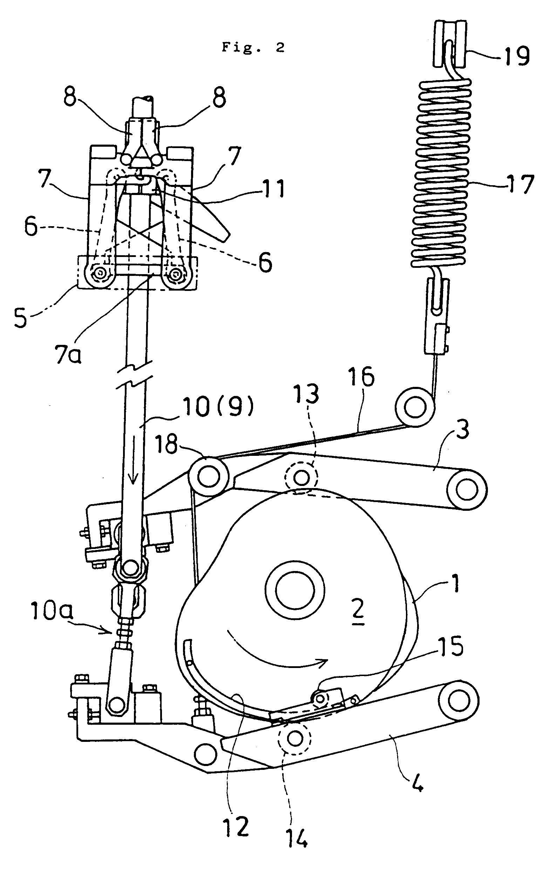

The second radial cam 2, which provides the upward and downward movements of the second drive rod 10 communicated via the jaw arms 7a, 7a and the links 6, 6 with the sealing jaws 7, 7, has an arc-shaped guiding member 12 mounted to the outer side (the front side in Fig. 1) thereof. The arc-shaped guiding member 12 is secured in position to that the second arm 4 can swing smoothly with its cam roller 14 rotating in contact with the bottom of the second radial cam 2 which rotates in the counter-clockwise direction while an auxiliary roller 15 mounted to the top of the second arm 4 at a short distance from the cam roller 14 and extending towards a swing axle of the second arm 4 runs on the arc-shaped guiding member 12, thus preventing the second arm 4 from disengaging from the bottom surface of the second radial cam 2 (as shown in Fig. 4) in case the sealing jaws 7, 7 move downward for the opening operation with their respective forming flaps 8, 8 remaining closed and stuck to the web, at a time when the second arm 4, which is actuated along with the cam roller 14 located beneath the bottom of the second radial cam 2 by means of the counter-clockwise motion of the cam 2, travels from a position before the dead point (the bottom of stroke in the swing movement of the second arm 4) to a proper position after the dead point during the swing movement. Fig. 2 illustrates the opposing sealing jaws 7, 7 remaining closed during the downward movement before opening their flaps. (For better clarity the tubular web W has been omitted in Fig. 2 and the following figures). Accordingly, the machine can be prevented from stalling with the two opposing sealing jaws 7, 7 remaining closed, as their respective forming flaps remain sticking to the web, during the upward movement after traveling towards the bottom of stroke to open their flaps.

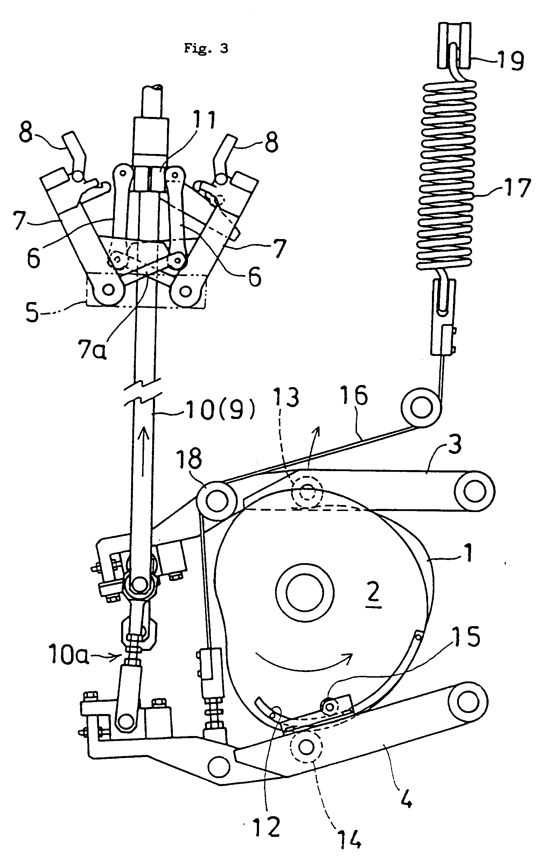

Fig. 3 illustrates the sealing jaws 7, 7 which remain open at a time when the second arm 4 reaches the bottom of stroke and the first arm 3 is ready for the clockwise motion, as the first cam 1 mounted on the same axle as the second cam 2 rotates counter-clockwise, while showing the first and second rods 9, 10, which are connected respectively to the first and second arms 3, 4, starting moving upward at the time. The second arm 4 is forced to move upward by being lifted by the arc-shaped guiding member 12 of the second cam 2, while at the same time being pulled upwardly via the toothed belt 16 by the extension coil spring 17, thus being prevented from disengaging from the bottom of the second cam 2, as shown in Fig. 4, in case the sealing jaws 7, 7 remain closed when moving downward to the bottom of stroke as with the radial cams 1 and 2 keeping at the same rotating positions as in Fig. 3. More specifically, the other communicating mechanisms in the machine can be protected from overload which may be caused in case the opposing sealing jaws 7, 7 stop moving upon bearing an excessive pressing force exerted in the closing direction via the links 6, 6 by the second drive rod 10 as the yoke 5 accommodating the closed jaws 7, 7 is lifted upwardly, after reaching the bottom of stroke, by means of the upward movement of the first arm 3 with the first drive rod 9.

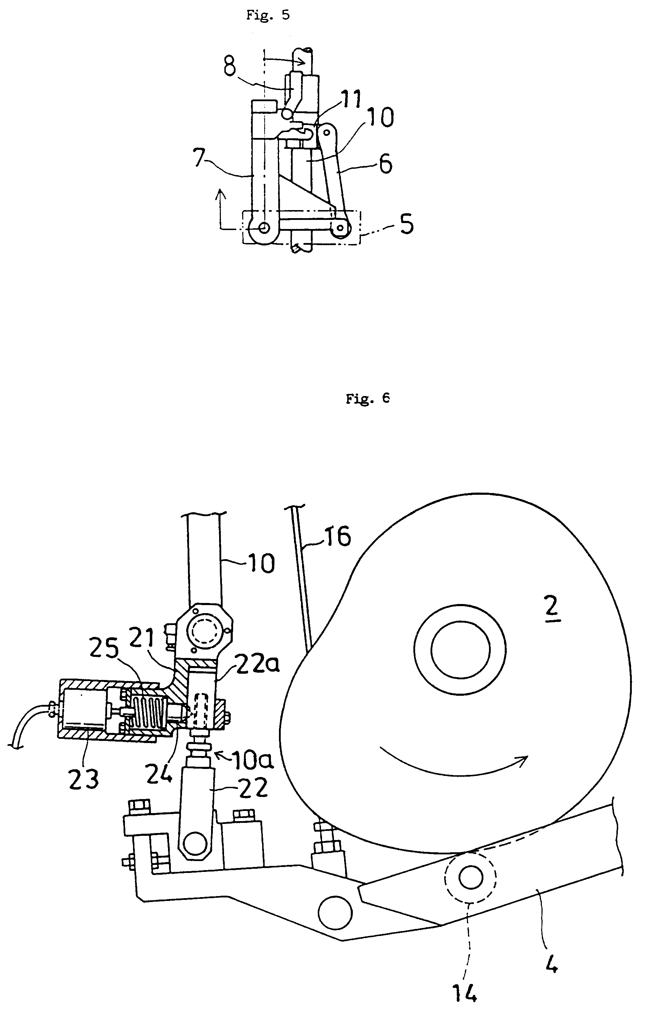

Fig. 5 illustrates one of the opposing sealing jaws 7, 7 shown in Fig. 4. The jaw 7 is in the closed state as with its top-mounted forming flap 8 sticking to the web (not shown) thus to bear an excessive pressing force upon moving upward against the second drive rod 10 communicated via the link 6 therewith as turning towards the inside (clockwisely in the figure) about a pivot.

The reciprocal action of the arc-shaped guiding member 12 mounted on a side of the second cam 2 and the auxiliary roller 15 mounted to the second arm 4 prevents trouble which may be caused in case the jaws 7, 7 which are closed with their top-mounted forming flaps sticking to the web, move downward and return upwardly, whereby the apparatus is prevented from bearing an overload and thus enabled to run continuously.

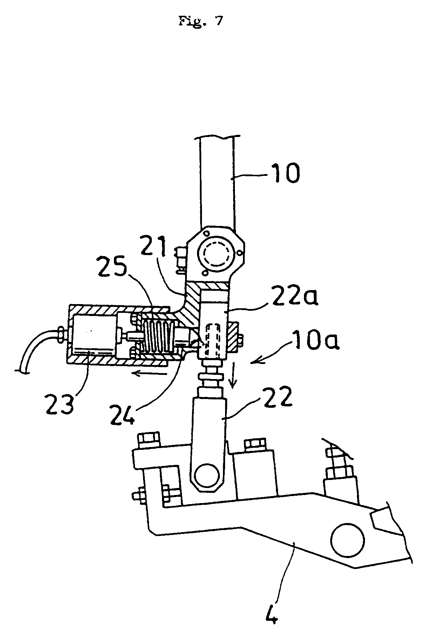

Fig. 6 is a partially vertical sectional front view showing another overload protecting device according to the present invention, the device being disposed beneath the second drive rod 10 in the tubular material web processing apparatus. Fig. 7 is a partially vertical sectional front view showing the device in motion.

This overload protection device has an overload removal mechanism at a joint rod 10a disposed between the end of the second drive rod 10 and the distal end of the second arm 4 in the tubular material web processing apparatus. Beneath the second drive rod 10 and along the axial line thereof disposed in a sub-rod 22 which is pivotably mounted to the distal end of the second arm 4 and has, at top, a sub-rod top member 22a adjustably screwed thereon along the axial line. The sub-rod top member 22a is slidably accommodated within a joint member 21 which is pivotably mounted to the lower end of the second drive rod 10. The sub-rod member 22a has a conical recess in a side wall thereof so as to be held with the forward end of a plunger 24, as will be described hereinafter, in the joint member 21. A shallow recess communicated to the conical recess is provided so that the end of the plunger 24 can reset therein upon withdrawing. The joint member 21 contains in the lower portion thereof the plunger 24 which is pressed by a coil spring 25 so that the conical forward end of the plunger 24 can reset normally within the conical recess of the sub-rod top member 22a. In the rear of the plunger 24 and along its axial line disposed is a detection switch 23 for detecting the lengthwise movement of the sub-rod top member 22a. The detection switch 23 is integrally mounted to the joint member 21 so as to operate upon being pressed with the rear end of the plunger 24.

Accordingly, in case the top member 22a of the sub-rod 22 is moved downward from its position determined with the plunger 24 because the tension, exerted along the axial line of the sub-rod 22, more specifically, of the second drive rod 10 becomes greater than the programmed rating determined by the pressure setting of the coil spring 25, the plunger 24 moves leftward along its axial line thus to turn the detection switch 23 on (as shown in Fig. 7), whereby the machine will stop running as its brake (not shown) is engaged. Consequently, when the sealing jaws 7, 7 in the closed state stop moving as the second arm 4 turns downward, e.g. because the toothed belt 16, which pulls upward the second arm 4, breaks or a spanner is caught between the second radial cam 2 and the second arm 4, the machine will stop automatically thus to protect its communicating systems from overloading and damage. Then, an operator can return the machine to normal operation without any damage given after removing the problem which may result in damage.

According to the embodiments, in the former case provided with the arc-shaped guiding member 12 mounted on a side of the second cam 2 and the auxiliary guiding roller 15 mounted to the second arm 4, the trouble, such as an overload exerted on the machine when the sealing jaws 7, 7 remaining closed move upward after lowering with their top-mounted forming flaps sticking to the web, is prevented beforehand, while in the latter case provided with the overload removal mechanism of the joint rod 10a for joining the second drive rod 10, the machine will stop automatically thus to prevent from bearing an overload which is produced when the sealing jaws 7, 7 remaining closed stop moving as an excessive tension is exerted on the second drive rod 10 with the toothed belt 16 for pulling the second arm 4 being cut apart or with a spanner being caught in the lower part of the second radial cam 2.

It will be understood that both embodiments can be utilized together in an apparatus, in which the trouble caused by a sudden stop of the closed sealing jaws with their top-mounted forming flaps sticking to the web is prevented in readiness while the machine will stop automatically thus to prevent overloading which may result in damage to the machine in case the second arm passes over the dead point thus to leave the arc-shaped guide member unworkable and in addition, the toothed belt is cut apart.

It is apparent from the descriptions set forth above that, according to the present invention, the first device, in which the arc-shaped guiding member is mounted to the second radial cam and the second arm can be intensively turned about a pivot at the bottom of stroke by means of the action of the auxiliary roller mounted to the second arm, protects the machine from damage by running continuously upon removing the trouble that the sealing jaws remain closed thus to exert an overload on the machine during a trial run of the packaging machine with no webs loaded therein, while the second device having the overload removal mechanism of the joint rod between the lower portion of the second drive rod and the distal end of the second arm protects the machine from damage by stopping the machine automatically in case the sealing jaws remain closed during the operation thus to exert an overload causing the machine to stop, for instance, as the toothed belt is cut apart accidentally. Moreover, in the apparatus employing both of the devices, the machine can be protected from damage by preventing the sealing jaws from remaining closed with their top-mounted flaps sticking to the web and additionally, by stopping itself in case the sealing jaws remain closed with an unexpected cause of trouble.

## Claims

1. A tubular web sealing apparatus comprising at least one pair of sealing jaws (7) having forming flaps (8) connected thereto for engaging and forming the tubular web (W), a yoke (5) to which said jaws are pivotally mounted, a first drive rod (9) driven by a cam (1) for controlling reciprocating movement of said yoke (5) in the longitudinal direction of the tubular web (W), a second drive rod (10) connected to a cam follower arm (4) for controlling closing and opening of said jaws, respectively, during the downward an upward strokes thereof, said cam follower arm being held in engagement with the surface of a rotatingly driven radial cam (2) by pressing means (16, 17), **characterized** in that said radial cam (2) having a laterally projecting arcuate guide member (12) and said cam follower arm (4) having an auxiliary roller (15) engaging with the radially inward surface of said guide member (12) for preventing said cam follower arm (4) to become disengaged from the radial cam surface of the cam (2), said cam follower arm (4) is in contact with the lower cam surface of said cam (2) and said guide member (12) extends along a portion of said cam (2) corresponding substantially to the lower-most position of said cam surface and the beginning of the subsequent upward stroke.

2. A tubular web sealing apparatus comprising at least one pair of sealing jaws (7) having forming flaps (8) connected thereto for engaging and forming the tubular web (W), a yoke (5) to which said jaws are pivotally mounted, a first drive rod (9) driven by a cam (1) for controlling reciprocating movement of said yoke (5) in the longitudinal direction of the tubular web (W), a second drive rod (10) connected to a cam follower arm (4) for controlling closing and opening of said jaws, respectively, during the downward and upward strokes thereof, said cam follower arm being held in engagement with the surface of a rotatingly driven radial cam (2) by pressing means (16, 17), **characterized** in that said cam follower arm (4) is connected to said second drive rod (10) by an overload coupling device (10a) which comprises a rod member (22) pivotally connected to said cam follower arm (4) about an axis and a joint member (21) pivotally connected to said drive rod (10) about an axis and holding said rod member (22) such that said joint member (21) shifts to said rod member (22) along the line defined by said two axes when overloaded and a sensing switch (23) for detecting said shift of the joint member (21) due to the overload and for subsequently alarming and/or stopping the machine.

3. An apparatus as claimed in claim 2, wherein said rod member (22) is held by means of a spring loaded plunger (24) provided on said joint member (21) engaging in a recess formed in the side surface of said rod member (22).

4. An apparatus as claimed in claim 1 and having an overload coupling device (10a) which comprises a rod member (22) pivotally connected to said cam follower arm (4) about an axis and a joint member (21) pivotally connected to said drive rod (10) about an axis and holding said rod member (22) such that said joint member (21) shifts to said rod member (22) along the line defined by said two axes when overloaded and a sensing switch (23) for detecting said shift of the joint member (21) due to the overload and for subsequently alarming and/or stopping the machine.

5. An apparatus as claimed in claim 4, wherein said rod member (22) is held by means of a spring loaded plunger (24) provided on said joint member (21) engaging in a recess formed in the side surface of said rod member (22)

## Patentansprüche

1. Schlauchbahnsiegelvorrichtung mit mindestens einem Paar von Siegelklauen (7), welche Formklappen (8) aufweisen, die daran befestigt sind um an die Schlauchbahn (W) anzugreifen und diese zu formen, einem Joch (5), an welchem die Klauen schwenkbar befestigt sind, einen ersten Antriebsstab (9), der durch eine Nocke (1) getrieben ist zum Steuern der Hin- und Herbewegung des Jochs (5) in Längsrichtung der Schlauchbahn (W), einem zweiten Antriebsstab (10), der mit einem Nockenfolgerarm (4) verbunden ist zum Steuern der Schließung bzw. Öffnung der Klauen während ihrer Abwärts- und Aufwärts-Hübe, wobei der Nockenfolgerarm im Eingriff gehalten wird mit der Oberfläche einer drehend angetriebenen Radialnocke (2) mit Hilfe von Preßvorrichtungen (16, 17),
dadurch **gekennzeichnet,** daß die Radialnocke (2) ein seitlich vorstehendes gebogenes Führungsteil (12) aufweist und daß der Nockenfolgerarm (4) eine Hilfswalze (15) aufweist, die im Eingriff steht mit der radialen Innenfläche des Führungsteils (12) zum Verhindern, daß der Nockenfolgerarm (4) aus dem Eingriff von der radialen Nokkenfläche der Nocke (2) kommt, wobei der Nockenfolgerarm (4) in Kontakt mit der unteren Nockenoberfläche der Nocke (2) ist und sich das Führungsteil (12) längs eines Teils der Nocke (2) erstreckt, welcher im wesentlichen der tiefsten Stellung der Nockenoberfläche und dem Anfang des darauffolgenden Aufwärtshubs entspricht.

2. Schlauchbahnsiegelvorrichtung mit mindestens einem Paar von Siegelklauen (7), welche Formklappen (8) aufweisen, die daran befestigt sind um an die Schlauchbahn (W) anzugreifen und diese zu formen, einem Joch (5), an welchem die Klauen schwenkbar befestigt sind, einen ersten Antriebsstab (9), der durch eine Nocke (1) getrieben ist zum Steuern der Hin- und Herbewegung des Jochs (5) in Längsrichtung der Schlauchbahn (W), einem zweiten Antriebsstab (10), der mit einem Nockenfolgerarm (4) verbunden ist zum Steuern der Schließung bzw. Öffnung der Klauen während ihrer Abwärts- und und Aufwärts-Hübe, wobei der Nockenfolgerarm im Eingriff gehalten wird mit der Oberfläche einer drehend angetriebenen Radialnocke (2) mit Hilfe von Preßvorrichtungen (16, 17),
dadurch **gekennzeichnet,** daß der Nockenfolgerarm (4) verbunden ist mit der zweiten Antriebsstange (10) durch eine Überlast-Kupplungsvorrichtung (10a), welche ein Stabteil (22) aufweist, das schwenkbar um eine Achse mit dem Nockenfolgerarm (4) verbunden ist und ein Verbindungsteil (21), das schwenkbar um eine Achse verbunden ist mit dem Antriebsstab (10) und das Stabteil (22) so hält, daß das Verbindungsteil (21) zu dem Stabteil (22) längs der Linie schiebt, die bestimmt ist durch die beiden Achsen, wenn es überlastet ist, und einen Sensorschalter (23) zum Feststellen des Verschiebens des Verbindungsteils (21) aufgrund der Überlast und zum darauffolgenden Alarmieren und/oder Stoppen der Maschine.

3. Schlauchbahnsiegelvorrichtung nach Anspruch 2,
wobei das Stabteil (22) gehalten ist mit Hilfe eines federbelasteten Kolbens (24), der an dem Verbindungsteil (21) vorgesehen ist und im Eingriff steht mit einer Ausnehmung in der seitlichen Oberfläche des Stabteils (22).

4. Schlauchbahnsiegelvorrichtung nach Anspruch 1,
mit einer Überlast-Kupplungsvorrichtung (10a) mit einem Stabteil (22), das schwenkbar um eine Achse mit dem Nockenfolgerarm (4) verbunden ist und einem Verbindungsteil (21), das schwenkbar um eine Achse mit dem Antriebsstab (10) verbunden ist und das Stabteil (22) so hält, daß das Verbindungsteil (21) zum Stabteil (22) schiebt entlang der Linie, die bestimmt ist durch die zwei Achsen, wenn es überlastet ist, und einem Sensorschalter (23) zum Feststellen der Verschiebung des Verbindungsteils (21) aufgrund einer Überlast und zum darauffolgenden Alarmieren und/oder Stoppen der Maschine.

5. Schlauchbahnsiegelvorrichtung nach Anspruch 4,
wobei das Stabteil (22) gehalten ist mit Hilfe eines federbelasteten Kolbens (24), der an dem Verbindungsteil (21) vorgesehen ist und im Eingriff steht mit einer Ausnehmung in der seitlichen Oberfläche des Stabteils (22).

## Revendications

1. Appareil de scellement de bande tubulaire comprenant au moins une paire de mâchoires de scellement (7) comportant des pattes de formage (8) qui leur sont connectées afin d'engager et de former la bande tubulaire (W), un collier (5) sur lesquel lesdites mâchoires sont montées en pivotement, une pemière tige d'entraînement (9) entraînée par une came (1) pour commander le mouvement alternatif dudit collier (5) dans la direction longitudinale de la bande tubulaire (W), une seconde tige d'entraînement (10) connectée à un bras de contre-came (4) pour commander la fermeture et l'ouverture desdites mâchoires, respectivement, durant leurs courses les conduisant vers le bas et vers le haut, ledit bras de contre-came étant maintenu en engagement avec la surface d'une came radiale entraînée en rotation (2) par des moyens de pression (16, 17), caractérisé en ce que ladite came radiale (2) ayant un élément de guidage arqué se projetant latéralement (12) et ledit bras de contre-came (4) ayant un rouleau auxiliaire (15) s'engageant avec la surface radialement interne dudit élément de guidage (12) pour empêcher ledit bras de contre-came (4) de se désengager de la surface de came radiale (2), ledit bras de contre-came (4) est au contact de la surface de came inférieure de ladite came (2) et ledit élément de guidage (12) s'étend le long d'une partie de ladite came (2) correspondant sensiblement à la position la plus basse de ladite surface de came et le commencement de la course suivante allant vers le haut.

2. Appareil de scellement de bande tubulaire comprenant au moins une paire de mâchoires de scellement (7) comportant des pattes de formage (8) qui leur sont connectées afin d'engager et de former la bande tubulaire (W), un collier (5) sur lesquel lesdites mâchoires sont montées en pivotement, une pemière tige d'entraînement (9) entraînée par une came (1) pour commander le mouvement alternatif dudit collier (5) dans la direction longitudinale de la bande tubulaire (W), une seconde tige d'entraînement (10) connectée à un bras de contre-came (4) pour commander la fermeture et l'ouverture desdites mâchoires, respectivement, durant leurs courses les conduisant vers le bas et vers le haut, ledit bras de contre-came étant maintenu en engagement avec la surface d'une came radiale entraînée en rotation (2) par des moyens de pression (16, 17), caractérisé en ce que ledit bras de contre-came (4) est connecté à ladite seconde tige d'entraînement (10) par l'intermédiaire d'un dispositif de raccordement de surcharge (10a) qui comprend un élément à tige (22) connecté en pivotement audit bras de contre-came (4) autour d'un axe et d'un élément à joint (21) connecté en pivotement à ladite tige d'entraînement (10) autour d'un axe et maintenant ledit élément à tige (22) de façon telle que ledit élément à joint (21) se déporte vers ledit élément à tige (22) le long de la ligne définie par lesdits deux axes lorsqu'il est surchargé, et un interrupteur de contact (23) destiné à détecter ledit déport de l'élément à joint (21) consécutif à la surcharge et, postérieurement à cette détection, à mettre en alarme et/ou à stopper la machine.

3. Appareil selon la revendication 2, dans lequel ledit élément à tige (22) est maintenu au moyen d'un ressort de pression (24) prévu sur ledit élément à joint (21) et s'engageant dans un évasement formé dans la surface latérale dudit élément à tige (22).

4. Appareil selon la revendication 1 et ayant un dispositif de raccordement de surcharge (10a) qui comprend un élément à tige (22) connecté en pivotement audit bras de contre-came (4) autour d'un axe et d'un élément à joint (21) connecté en pivotement à ladite tige d'entraînement (10) autour d'un axe et maintenant ledit élément à tige (22) de façon telle que ledit élément à joint (21) se déporte vers ledit élément à tige (22) le long de la ligne définie par lesdits deux axes lorsqu'il est surchargé, et un interrupteur de contact (23) destiné à détecter ledit déport de l'élément à joint (21) consécutif à la surcharge et, postérieurement à cette détection, à mettre en alarme et/ou à stopper la machine.

5. Appareil selon la revendication 4, dans lequel ledit élément à tige (22) est maintenu au moyen d'un piston à ressort (24) prévu sur ledit élément à joint (21) et s'engageant dans un évasement formé dans la surface latérale dudit élément à tige (22).
